# EUROPEAN PATENT APPLICATION

(11) **EP 2 849 074 A1**
(43) Date of publication of application: **18.03.2015**
(21) Application number: 12876236.6
(22) Date of filing: 08.05.2012
(51) Int. Cl.: G06F 13/10, G06F 3/06

(54) **NETWORK SYSTEM, MAINTENANCE WORK MANAGEMENT METHOD, PROCESSING DEVICE, AND PROGRAM**

(71) Applicant: Fujitsu Limited, Kawasaki-shi, Kanagawa 211-8588 (JP)
(72) Inventor: KOBASHI, Kyuu, Kawasaki-shi Kanagawa 211-8588 (JP)
(74) Representative: Hoffmann Eitle
(86) International application number: PCT/JP2012/061746
(87) International publication number: WO 2013/168229

(57) **Abstract**

An influence determination unit (11) configured to determine whether each path in a network system is a prospective to be affected path affected by maintenance work or a prospective to be unaffected path not affected by the maintenance work by referring to path management information (231)that manages information about a plurality of paths, a path influence information output unit (12) configured to output a diagnosis result to a plurality of processing apparatuses as path influence information about each of the paths, a maintenance possibility diagnosis unit (42) configured to conduct a diagnosis on whether the maintenance work is performable based on the path influence information of the paths connected, and a maintenance possibility information output unit (43) configured to output the diagnosis result as maintenance possibility information are included, wherein maintenance work efficiency is improved in the network system by outputting permission information indicating permission or refusal of the maintenance work for maintenance object components based on the maintenance possibility information.

## Description

### FIELD

The embodiment discussed herein is directed to a network system, a maintenance work management method, a processing apparatus, and a program.

### BACKGROUND

In recent years, multi paths providing redundancy to a path by connecting a server and a storage apparatus via a plurality of paths are realized in a storage system including a plurality of storage apparatuses and a plurality of servers connected by, for example, Storage Area Network (SAN) including Fibre Channel (FC), Internet Small Computer System Interface (ISCSI) or Serial Attached SCSI (SAS). Multi paths are realized by driver software on a server.

In a system in which a server is connected to a storage apparatus by such multi paths, maintenance (hardware maintenance) to replace a portion of components (maintenance object components) constituting a system, for example, a network adapter is realized by performing work of the following steps (1) to (8).

Hereinafter, System Engineer (SE) is an operator who manages and operates a server and is mostly a user (customer) of the server or a person in charge of a system company. Customer Engineer (CE) is an operator who performs maintenance work of storage such as component replacement of hardware and is mostly a person in charge of a storage vendor and generally has no access rights to a server.
(1) SE deduces paths affected by hardware maintenance from a system design document or the like.
(2) SE checks that a path (maintenance object path) in which maintenance object components are contained is made redundant by multi paths and another path in the multi paths that is different from the maintenance object path is normal. Such checking is done by checking the path status.
(3) After checking that the other path is normal in step (2), SE closes the maintenance object path.
(4) SE repeats the above steps (1) to (3) for all servers in the system.
(5) CE inputs the start of maintenance on a maintenance screen of a maintenance PC (personal computer).
(6) CE performs maintenance work such as component replacement.
(7) CE inputs the completion of maintenance on the maintenance screen of the maintenance PC.
(8) SE restores the path closed in step (3) for all servers.

By performing processing of steps (1) to (8) as described above, maintenance work such as component replacement can be performed without stopped the storage system in which a server is connected to a storage apparatus via multi paths.
Patent Literature 1: Japanese Laid-open Patent Publication No. 2007-317206

### SUMMARY OF THE INVENTION

### PROBLEMS TO BE SOLVED BY THE INVENTION

In such a conventional system including multi paths, however, among steps (1) to (8) described above, work by SE is needed in at least steps (1) to (4) and (8) in the hardware maintenance work. Thus, maintenance work is not able to be performed by CE only, posing a problem of reduced convenience.

Particularly in recent years, an increasing number of servers are connected to storage and accordingly, the work load and time of SE needed for confirmation work in step (2) described above tend to increase.

When the number of servers included in a system is large, a huge amount of time or labor is needed to perform confirmation processing of step (2) described above for all servers. Further, when the number of servers included in a system is large, for example, a case when the state of a server checked earlier may change while confirmation work of each server in step (2) described above being performed and information obtained by checking may not necessarily reflect the state of the system.

For example, the status of a path is checked for the checking in step (2) described above and if the diagnosis interval of a path is set to, for example, 10 min, the information obtained by checking is the status of the path about 10 min ago and the status of the path may have changed by the time when step (3) is executed.

A total-path closure may be caused by performing maintenance work based on the status of paths that is not the latest.

Further, a total-path closure may be caused by performing maintenance work when the configuration is erroneously checked in step (1) described above or a wrong path is closed in step (3).

As a confirmation method of path, SAN management software may be used to acquire information, but for this purpose, a SAN management server needs to be prepared. In addition, CE is generally not allowed to operate the SAN management software for operation. Further, for the SAN management software to be able to acquire information, a restriction of the necessity for a storage apparatus to be connected to a business LAN is imposed.

In an aspect, an object of the present invention is to improve maintenance work efficiency in a network system.

However, the object is not limited to the above object and achieving an operation effect that is derived by each component shown in the best mode to carry out the invention described later and cannot be obtained by conventional technology can also be positioned as another object of the present invention.

### MEANS TO SOLVE THE PROBLEMS

The network system is a network system including a maintenance object apparatus having maintenance object components as objects of maintenance work and a plurality of processing apparatuses connected to the maintenance object apparatus via a plurality of paths, wherein the maintenance object apparatus includes an influence determination unit configured to determine whether each of the paths in the network system is a prospective to be affected path affected by the maintenance work or a prospective to be unaffected path not affected by the maintenance work by referring to path management information that manages information about the plurality of paths and a path influence information output unit configured to output a determination result determined by the influence determination unit to the plurality of processing apparatuses as path influence information about each of the paths and each of the processing apparatuses includes a maintenance possibility diagnosis unit configured to conduct a diagnosis on whether the maintenance work is performable based on the path influence information of the path connected to a local apparatus and a maintenance possibility information output unit configured to output a diagnosis result by the maintenance possibility diagnosis unit to the maintenance object apparatus as maintenance possibility information, wherein the maintenance object apparatus outputs permission information indicating permission or refusal of the maintenance work for the maintenance object components based on the maintenance possibility information of the plurality of processing apparatuses.

The maintenance work management method is a maintenance work management method in a network system comprising a maintenance object apparatus having maintenance object components as objects of maintenance work and a plurality of processing apparatuses connected to the maintenance object apparatus via a plurality of paths, the maintenance object apparatus including determining whether each of the paths in the network system is a prospective to be affected path affected by the maintenance work or a prospective to be unaffected path not affected by the maintenance work by referring to path management information that manages information about the plurality of paths, outputting a determined determination result to the plurality of processing apparatuses as path influence information about each of the paths, conducting a diagnosis on whether the maintenance work is performable based on the path influence information of the path connected to a local apparatus in each of the processing apparatuses, outputting the diagnosis result to the maintenance object apparatus as maintenance possibility information, and outputting permission information indicating permission or refusal of the maintenance work for the maintenance object components based on the maintenance possibility information of the plurality of processing apparatuses by the maintenance object apparatus.

Further, the processing apparatus is a processing apparatus connected to a maintenance object apparatus having maintenance object components as objects of maintenance work via a plurality of paths, wherein the maintenance object apparatus includes an influence determination unit configured to determine whether each of the paths is a prospective to be affected path affected by the maintenance work or a prospective to be unaffected path not affected by the maintenance work by referring to path management information that manages information about the plurality of paths, a path influence information output unit configured to output a determination result determined by the influence determination unit as path influence information about each of the paths, and a work permission information output unit configured to output permission information indicating permission or refusal of the maintenance work for the maintenance object components based on maintenance possibility information indicating a diagnosis result whether the maintenance work performed based on the path influence information of the path connected to a local apparatus is performable.

Further, the program is a program causing a computer to execute processing including determining whether, in a network system including a maintenance object apparatus having maintenance object components as objects of maintenance work and a plurality of processing apparatuses connected to the maintenance object apparatus via a plurality of paths, each of the paths in the network system is a prospective to be affected path affected by the maintenance work or a prospective to be unaffected path not affected by the maintenance work by referring to path management information that manages information about the plurality of paths, outputting a determined determination result as path influence information about each of the paths to the plurality of processing apparatuses, and outputting permission information indicating permission or refusal of the maintenance work for the maintenance object components based on maintenance possibility information indicating a diagnosis result whether the maintenance work performed based on the path influence information of the path connected to a local apparatus is performable.

### EFFECT OF THE INVENTION

Maintenance work can be performed efficiently.

### BRIEF DESCRIPTION OF DRAWINGS

FIG. 1 is a diagram illustrating a function configuration of a storage system as an example of an embodiment.
FIG. 2 is a diagram illustrating a connection configuration of the storage system as an example of the embodiment.
FIG. 3 is a diagram exemplifying a multi-path configuration management table in the storage system as an example of the embodiment.
FIG. 4 is a diagram exemplifying a maintenance flag in the storage system as an example of the embodiment.
FIG. 5 is a diagram exemplifying a data configuration of an inquiry notification in the storage system as an example of the embodiment.
FIG. 6 is a diagram illustrating a maintenance determination example by a path diagnosis unit in the storage system as an example of the embodiment.
FIG. 7 is a flow chart illustrating processing by CE during maintenance work in the storage system as an example of the embodiment.
FIG. 8 is a flow chart illustrating processing of a storage apparatus during maintenance work in the storage system as an example of the embodiment.
FIG. 9 is a flow chart illustrating processing of a server during maintenance work in the storage system as an example of the embodiment.
FIG. 10 is a flow chart illustrating processing of CE during error handling in the storage system as an example of the embodiment.
FIG. 11 is a flow chart illustrating processing of a storage apparatus during error handling in the storage system as an example of the embodiment.
FIG. 12 is a flow chart illustrating processing of the server during error handling in the storage system as an example of the embodiment.

### DESCRIPTION OF EMBODIMENT

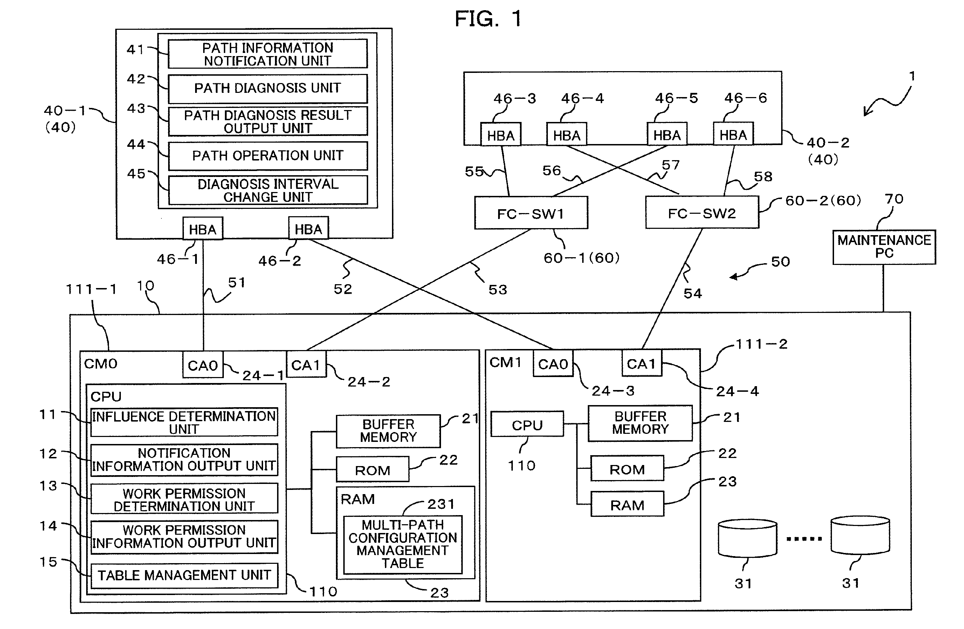

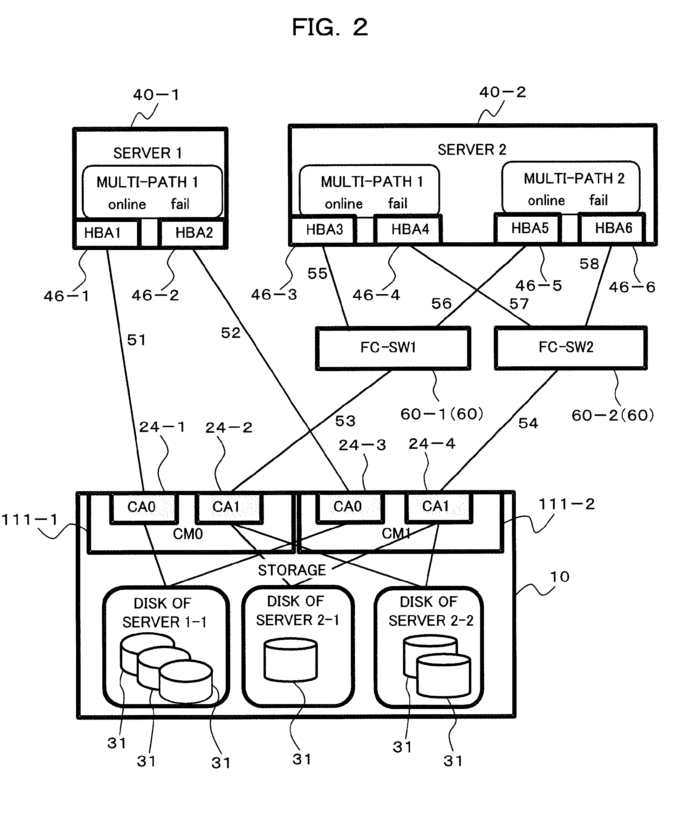

Hereinafter, an embodiment related to a network system, a maintenance work management method, a processing apparatus, and a program will be described with reference to the drawings. However, the embodiment described below is only illustrative and does not intend to exclude various modifications and application of technology not specified in the embodiment. That is, the present embodiment can be modified in various ways without deviating from the spirit thereof. FIG. 1 is a diagram illustrating a function configuration of a storage system 1 as an example of an embodiment and FIG. 2 is a diagram illustrating a connection configuration thereof.

In the storage system (network system) 1 as an example of the embodiment, as depicted in FIGS. 1 and 2, a storage apparatus 10 and a plurality (two in the example depicted in FIG. 1) of servers (information processing apparatuses) 40-1, 40-2 are communicably connected via a network 50.

The server 40-1 and the server 40-2 have similar configurations. Hereinafter, when it is necessary to identify one of a plurality of servers, reference signs 40-1, 40-2 are used as the reference sign indicating a server, but a reference sign 40 is used when arbitrary server is indicated.

The network 50 is a telecommunication line based on the standard, for example, SAN including FC, ISCSI, or a SAS fiber channel. In the example depicted in FIG. 1, the network 50 includes communication lines 51 to 58 and two switches 60-1, 60-2 and forms a multi-path configuration connecting the storage apparatus 10 and the servers 40-1, 40-2 via redundant paths.

The switches 60-1, 60-2 are relay apparatuses arranged between communication paths and switch paths of data transmitted through the network 50. In the present embodiment, the switches 60-1, 60-2 are fiber channel switches. In FIGS. 1 and 2, the switch 60-1 is denoted by FC-SW1 and the switch 60-2 is denoted by FC-SW2. These switches 60-1, 60-2 have similar configurations. Hereinafter, when it is necessary to identify one of a plurality of switches, reference signs 60-1, 60-2 are used as the reference sign indicating a switch, but a reference sign 60 is used when arbitrary switch is indicated.

In the present embodiment, a combination of HBA (Host Bus Adapter) 46-1 to 46-6 included in the server 40-1, 40-2 and CA 24-1 to 24-4 included in the storage apparatus 10 is called a path.

As depicted in FIG. 2, the server 40-1 is connected to the storage apparatus 10 via two paths (multi paths 1), a path connecting the HBA 46-1 and the CA 24-1 via the communication line 51 and a path connecting the HBA 46-2 and the CA 24-3 via the communication line 52. Hereinafter, a combination of paths forming multi paths may be referred to as a multi-path set or a path set and a multi-path set constituting the multi paths 1 in the server 40-1 may be denoted by a server 1-1.

The server 40-2 is connected to the storage apparatus 10 via two paths (multi paths 1), a path connecting the HBA 46-3 and the CA 24-2 via the communication lines 53, 55 and the switch 60-1 and a path connecting the HBA 46-4 and the CA 24-4 via the communication lines 54, 57 and the switch 60-2. Hereinafter, a multi-path set constituting the multi paths 1 in the server 2 may be denoted by a server 2-1.

Further, the server 40-2 is connected to the storage apparatus 10 via two paths (multi paths 2), a path connecting the HBA 46-5 and the CA 24-2 via the communication lines 53, 56 and the switch 60-1 and a path connecting the HBA 46-6 and the CA 24-4 via the communication lines 54, 58 and the switch 60-2. Hereinafter, a multi-path set constituting the multi paths 2 in the server 2 may be denoted by a server 2-2.

A maintenance PC 70 is a PC used by a maintenance operator (CE) and is connected to the storage apparatus 10 via, for example, a telecommunication line (not depicted) such as a maintenance LAN.

The maintenance PC 70 is a computer including an input apparatus such as a keyboard, a mouse, and a touch panel, a display apparatus such as a liquid crystal display, a CPU, a memory, a storage apparatus and the like. A general-purpose computer can be used as the maintenance PC 70 and for the same of convenience, the hardware configuration of the maintenance PC 70 is omitted.

CE performs an input operation to specify (select) maintenance object components intended for maintenance work such as replacement and the work expected time thereof via the input apparatus of the maintenance PC 70. The storage apparatus 10 is notified of maintenance object components and the work expected time input into the maintenance PC 70.

In addition, permission information indicating permission or refusal of maintenance work for maintenance object components is input into the maintenance PC 70 by a work permission information output unit 14 of the storage apparatus 10 described later.

The maintenance PC 70 notifies CE of the input permission information by causing the display apparatus to display the permission information as a maintenance screen. CE performs work by following various instructions displayed on the maintenance screen of the maintenance PC 70.

If, for example, permission information indicating that maintenance work is performable is input by the work permission information output unit 14, the maintenance PC 70 displays a message or the like indicating that work can be performed on the maintenance screen. If permission information indicating that maintenance work is not allowed to be performed is input by the work permission information output unit 14, the maintenance PC 70 causes the maintenance screen to display an error message or the like indicating that maintenance work is not allowed to be performed or information identifying a path determined to be non-maintainable.

An input screen (for example, a maintenance stop button) to instruct the stop of maintenance work is also displayed as a maintenance screen in the display apparatus and CE performs input processing to instruct the stop of maintenance work on the input screen. The stop instruction is transmitted to the storage apparatus 10 and the server 40 as a maintenance stop instruction.

Further, the maintenance PC 70 includes a function to input the completion of maintenance work when CE completes the maintenance work. For example, a input screen (for example, a maintenance complete button) to input the completion of maintenance work is displayed as a maintenance screen in the display apparatus and CE performs input processing to report the completion of maintenance work on the input screen. The completion report is transmitted to the storage apparatus 10 and the server 40 as a maintenance completion report.

The storage apparatus (processing apparatus) 10 provides a storage area to the host apparatus 40 (sic, correctly, server 40) and is, for example, a RAID (Redundant Arrays of Inexpensive Disks) apparatus.

The storage apparatus 10 includes, as depicted in FIG. 1, a plurality (two in the examples depicted in FIGS. 1 and 2) of CM (Controller Module: information processing apparatus) 111-1, 111-2 and one or more storage apparatuses 31.

The storage unit 31 is a storage apparatus to store data and the like and is, for example, HDD (Hard Disk Drive) or SSD (Solid State Drive). In the storage apparatus 10, the storage area of the storage unit 31 is allocated as a logical volume. The server 40 performs processing such as data writing or reading on the logical volume.

The CM 111-1, 111-2 are control apparatuses that exercise various kinds of control in the storage apparatus 10 and exercise various kinds of control such as access control to the storage unit 31 following, for example, a storage access request (access control signal) from the server 40 as a host computer.

The CM 111-1 and the CM 111-2 have similar hardware configurations. Hereinafter, when it is necessary to identify one of a plurality of CM, reference signs 111-1, 111-2 are used as the reference sign indicating CM, but a reference sign 111 is used when arbitrary CM is indicated. Hereinafter, the CM 111-1 may be referred to as CM 0 and the CM 111-2 may be referred to as CM 1.

The CM 111 includes, as depicted in FIG. 1, CA (Channel Adapter) 24-1, 24-2 (24-3, 24-4), a CPU 110, a buffer memory 21, a ROM 22, and a RAM 23.

The CA 24-1 to 24-4 are each interface controllers communicably connected to the server 40 and are, for example, fiber channel adapters. The CA 24-1 to CA 24-4 have mutually similar configurations. Hereinafter, when it is necessary to identify one of a plurality of CA, reference signs 24-1 to 24-4 are used as the reference sign indicating CA, but a reference sign 24 is used when arbitrary CA is indicated. Hereinafter, in the CM 0, the CA 24-1 may be referred to as CA 0 and the CA 24-2 may be referred to as CA 1. Similarly, in the CM 1, the CA 24-3 may be referred to as CA 0 and the CA 24-4 may be referred to as CA 1. Also hereinafter, the CA 24-1 to 24-4 may be referred to as ports.

The ROM 22 is a storage apparatus that programs executed by the CPU 110 and various kinds of data.

The buffer memory 21 is a storage apparatus that stores data received from the server 40 and data to be transmitted to the server 40.

The RAM 23 is a storage area that stores various kinds of data and programs and stores/expands data and programs for use when the CPU 110 executes programs. Incidentally, separate memories may be included as the buffer memory 21 and the RAM 23 and instead, a common memory may be included so that each of these functions is realized by dividing and using the storage area of the memory separately, an area as the buffer memory 21 and an area as the RAM 23.

In addition, a multi-path configuration management table 231 is stored in the RAM 23.

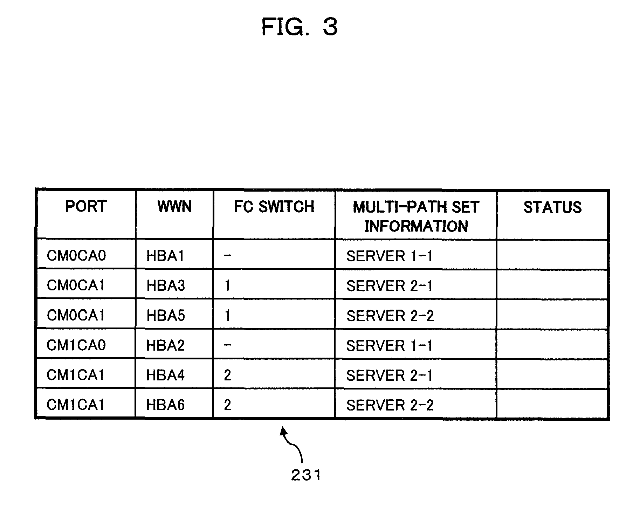

FIG. 3 is a diagram exemplifying the multi-path configuration management table 231 in the storage system as an example of the embodiment.

The multi-path configuration management table 231 is path management information that manages information of each path in the storage system 1. In the example depicted in FIG. 3, the multi-path configuration management table 231 is configured by associating FC switch information, multi-path set information, and status for each path.

In the multi-path configuration management table 231 depicted in FIG. 3, the path is identified by a combination of the CA 24 and the HBA 46. Then, each of the CA 24 is represented as a port. That is, in the example depicted in FIG. 3, the CA 24-1 is represented as a port CM0CA0 and similarly, the CA 24-2, 24-3, 24-4 are represented as ports CM0CA1, CM1CA0, CM1CA1 respectively.

Also in the multi-path configuration management table 231 depicted in FIG. 3, each HBA is identified by using WWN (World Wide Name). Then, in FIG. 3, for the sake of convenience, WWN of the HBA 46-1 to 46-6 are represented as HBA 1 to HBA 6.

The FC switch information is information to identify the switch 60 and if the switch 60 is contained in the corresponding path, information identifying the switch 60 is registered. In the example depicted in FIG. 3, "1" indicates the switch 60-1, "2" indicates the switch 60-2, and "-" indicates that the switch 60 is not contained in the relevant path.

The multi-path set information is information to identify multi paths constituted by the path. The value of a CDB (Command Descriptor Block) response described later received from the server 40 is set to the status. More specifically, information indicating maintainable or non-maintainable is stored.

Thus, the multi-path configuration management table 231 functions as path management information that manages information about a plurality of paths.

The multi-path configuration management table 231 is created and updated by a table management unit 15 described later.

The CPU 110 is a processing unit that performs various kinds of control and operations and realizes various functions by executing various programs stored in the ROM 22, the RAM 23 or the like. Then, in the CM 111, common known functions as CM, for example, access control to the storage unit 31 based on a storage access request from the server 40 are realized by OS (Operating System) or a program being executed by the CPU 110.

In the example depicted in FIG. 1, the illustration of the function configuration of the CM 111-2 in the storage apparatus 10 is omitted and the function configuration of only the CM 111-1 is depicted. Also in the present embodiment, an example in which the CM 111-1 of the CM 111-1, 111-2 functions as the primary CM is depicted.

In the present storage system 1, in addition to the above common known functions as CM, the CM 111-1 also includes, as depicted in FIG. 1, functions as an influence determination unit 11, a notification information output unit 12, a work permission determination unit 13, the work permission information output unit 14, and the table management unit 15. These functions are realized by the CPU 110 of the CM 111-1.

Programs to realize the functions as the influence determination unit 11, the notification information output unit 12, the work permission determination unit 13, the work permission information output unit 14, and the table management unit 15 are provided in a form recorded in a computer readable recording medium, for example, a flexible disk, CD (CD-ROM, CD-R, CD-RW and so on), DVD (DVD-ROM, DVD-RAM, DVD-R, DVD+R, DVD-RW, DVD+RW, HD DVD and so on), Blu-ray disk, magnetic disk, optical disk, and magneto-optical disk. Then, the computer reads a program from the computer readable recording medium and transfers the stores the program in an internal storage apparatus or an external storage apparatus for use. Alternatively, the program may be recorded in a storage apparatus (recording medium) like, for example, a magnetic disk, optical disk, or magneto-optical disk to provide the program to the computer from the storage apparatus via a communication path.

When the functions as the influence determination unit 11, the notification information output unit 12, the work permission determination unit 13, the work permission information output unit 14, and the table management unit 15 are realized, programs stored in the internal storage apparatus (in the present embodiment, the RAM 23 or the ROM 22) are executed by a microprocessor (in the present embodiment, the CPU 110) of the computer. At this point, the computer may read a program recorded in a recording medium and execute the program.

In the present embodiment, the computer is a concept including hardware and the operating system and means hardware operating under the control of the operating system. When the operating system is not needed and hardware is operated by an application program alone, the hardware itself corresponds to the computer. Hardware includes at least a microprocessor such as a CPU and a means for reading a computer program recorded in a recording medium and in the present embodiment, the CM 111 has the function as a computer.

The table management unit 15 creates the multi-path configuration management table 231. More specifically, the table management unit 15 creates the multi-path configuration management table 231 in steps of (i) and (ii) below:

### (i) Acquire multi-path information

The present storage system 1 includes a function (multi-path driver) in which the server 40 notifies the storage apparatus of a multi-path set.

The multi-path driver notifies the storage apparatus 10 of a unique value for each set of multi paths when the server 40 is activated or multi paths are built. For example, the multi-path driver transmits path set information like "CPUID or server name different for each server 40 + path set number managed by multi paths" to the storage apparatus 10 with predefined unique CDB.

In the storage apparatus 10, the table management unit 15 acquires information about multi paths by receiving the unique CDB. The table management unit 15 registered information extracted from the received CDB in the multi-path configuration management table 231 by using the port and WWN as keys.

By transmitting information about multi paths from each of the servers 40 using CDB, the table management unit 15 can acquire information by SCSI (Small Computer System Interface) commands without using LAN.

### (ii) Acquire a connected state of FC

Whether FC is directly connected or connected via the FC switch 60 in the storage apparatus 10 and also whether an FC protocol is directly connected or connected via the FC switch 60 can be determined by a known method. When connected via the FC switch 60, which of the FC switches 60 is connected can be determined from the domain ID or the like.

The table management unit 15 also records the connection information of the FC switch 60 in the multi-path configuration information table 231 (sic, correctly, multi-path configuration management table 231) as FC switch information.

Thus, in the storage apparatus 10, the table management unit 15 creates the multi-path configuration management table 231 based on multi-path information acquired from the server 40 acquired in step (i) and connection information FC acquired in step (ii). Accordingly, an overall picture of the network configuration of the storage system 1 can be grasped.

In common SAN management software, for example, configuration information of a network is not able to be acquired unless the storage apparatus 10 is connected to a business LAN. Also, in general, CE is frequently not permitted to operate the SAN management software and thus, it is difficult for CE to acquire multi-path information using the SAN management software.

In the present storage system 1, even if the storage apparatus 10 is not connected to a business LAN, the multi-path configuration management table 231 can be created by using information that can be acquired from the server 40 through SCSI and FC and information about the storage configuration held by the storage apparatus 10.

The method of creating the multi-path configuration management table 231 is not limited to the above method. When, for example, the storage apparatus 10 can be connected to a management server or the like that executes storage management software via LAN, the multi-path configuration management table 231 may be created by acquiring necessary information from the management server and can be carried out in various ways.

When a CDB response described later is received from the server 40, the table management unit 15 enters the information indicating maintainable or non-maintainable indicated by the CDB response in the status of the multi-path configuration management table 231.

The influence determination unit 11 determines whether paths are affected by maintenance work of the maintenance object component specified by the maintenance PC 70 being performed.

If, for example, the maintenance object component is a power unit (not depicted) of the storage unit 31 or the storage apparatus 10, maintenance/replacement work thereof does not affect paths. Thus, if maintenance work of the specified maintenance object component does not affect paths, the influence determination unit 11 notifies the work permission information output unit 14 that maintenance work does not affect paths.

For example, a list of maintenance components whose maintenance work affects paths is stored in the storage unit 31 of the storage apparatus 10 as reference information and the influence determination unit 11 refers to the reference information based on the specified maintenance object component. In this manner, whether a maintenance object component affects paths by performing maintenance work thereof can be determined. The reference information is not limited to a list of maintenance components affecting paths and can be carried out by changing the list when appropriate. For example, instead of a list of maintenance components affecting paths, information in which a flag is attached to maintenance components affecting paths may also be used.

The work permission information output unit 14 notified that the maintenance object component does not affect paths notifies the maintenance PC 70 of permission of maintenance work for the maintenance object component. The maintenance PC 70 causes, for example, the display apparatus to display a notification of maintenance permission.

CE checks the notification of maintenance permission displayed on the display apparatus of the maintenance PC 70 and completes maintenance work by immediately making a component replacement of the maintenance object component.

If maintenance/replacement work of the specified maintenance object component like, for example, the CA 24, CM 111, a cable, or the FC switch 60 affects paths, the influence determination unit 11 determines the influence of maintenance work thereof on each path.

That is, the influence determination unit 11 refers to the multi-path configuration management table 231 based on the maintenance object component to determine whether each path of the present storage system 1 is a maintenance object path (affected path) affected by maintenance work or a non-maintenance object path (unaffected path) not affected by maintenance work.

For example, the influence determination unit 11 determines whether the maintenance object component is the CA 24, the HBA 46, or the switch 60 included in paths registered in the multi-path configuration management table 231 or a communication line connecting these network devices. If the maintenance object component is one of these components, that is, if the maintenance object component is included in elements of the path, the relevant path is determined to be a maintenance object path. The influence determination unit 11 determines paths other than the maintenance object path as non-maintenance object paths.

The influence determination unit 11 sets these determination results (maintenance object paths or non-maintenance object paths) for each path to, for example, a predetermined storage area prepared in advance for each path in the RAM 23. Information about a diagnosis result is set, for example, as a flag (maintenance flag).

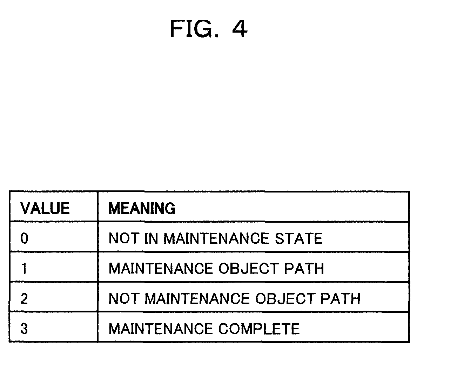

FIG. 4 is a diagram exemplifying a maintenance flag in the storage system 1 as an example of the embodiment. In the example depicted in FIG. 4, four states of "Not maintenance object" (sic, correctly, "Not in maintenance state"), "Maintenance object path", "Not maintenance object path (non-maintenance object path)", and "Maintenance complete" are associated with values of "0", "1", "2", and "3" respectively. For example, "Not in maintenance state" represents a state in which due to normal functioning, there is no need to maintain. As the default value of the maintenance flag, "0" indicating this state of not in maintenance state is set.

For example, if the path is determined to be a maintenance object path, the influence determination unit 11 sets the maintenance flag "1" indicating to be a maintenance object path to an inquiry notification transmitted as a response to a path diagnosis by a path diagnosis unit 42 of the server 40 described later. If the path is determined to be a non-maintenance object path, the influence determination unit 11 sets the maintenance flag "2" indicating not to be a maintenance object path to the inquiry notification transmitted as a response to a path diagnosis.

These diagnosis results (maintenance flags) set for each path are transmitted to each of the servers 40 by the inquiry notification by the notification information output unit 12.

The notification information output unit (path influence information output unit) 12 transmits information to be provided to the server 40 by using an inquiry notification function. The inquiry notification (notification information) is transmitted to the transmission source of an inquiry request as a response to the inquiry request transmitted from the server 40. The inquiry request and the inquiry response are transmitted and received based on the standard of SCSI and are realized by a known method and therefore, a detailed description thereof is omitted.

The notification information output unit 12 outputs a special inquiry including the maintenance flag (path influence information, determination result information) set by the influence determination unit 11 for each path to each of the servers 40.

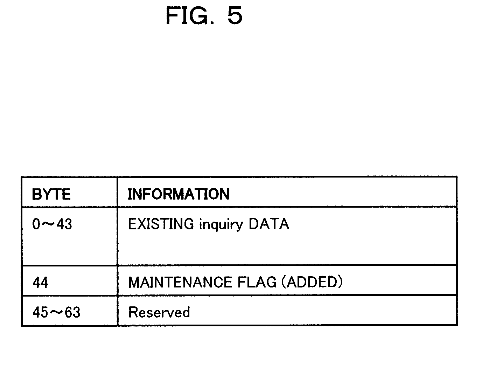

FIG. 5 is a diagram exemplifying the data configuration of an inquiry notification in the storage system 1 as an example of the embodiment.

In the present storage system 1, a special inquiry of a page code F0h is used as an inquiry notification and the value of the maintenance flag is stored in a byte reserved therefor.

In an inquiry response in a conventional method, a byte 44 to 63 area is included as a reserved area. In the present storage system 1, a portion of the reserved area is used for storing the maintenance flag.

In the example depicted in FIG. 5, existing inquiry data is stored in a byte 0 to 43 area and the value of the aforementioned maintenance flag is stored in byte 44.

These inquiry notifications transmitted for each path are used by each of the servers 40 for diagnosis by the path diagnosis unit 42 whether maintenance work is performable.

When a maintenance stop instruction is input from the maintenance PC 70, the notification information output unit (stop notification information output unit) 12 also outputs stop notification information indicating the stop of maintenance work to the server 40 through the inquiry notification. The stop notification information is also set as, for example, a flag in a predetermined area of the special inquiry (inquiry notification). The stop notification information is desirably stored in a different area (byte 45 to 63) from the area (byte 44) used for storing the maintenance flag of the reserved area of the aforementioned inquiry response.

The work permission determination unit 13 determines permission or refusal of maintenance work for maintenance object components based on maintenance enabled CDB or maintenance disabled CDB (maintenance possibility information) transmitted, as will be described later, from a path diagnosis result output unit 43 of each of the servers 40. The maintenance disabled CDB is information representing a diagnosis result output when the server 40 determines that maintenance work for the specified maintenance object component cannot be performed regarding multi paths connected to the server 40. The maintenance enabled CDB is information representing a diagnosis result output when the server 40 determines that maintenance work for the specified maintenance object component is performable regarding multi paths connected to the server 40. Details of the maintenance enabled CDB and the maintenance disabled CDB will be described later.

When the maintenance disabled CDB is received from at least one of a plurality of the servers 40, the work permission determination unit 13 determines that the maintenance work is not allowed to be performed. When the maintenance disabled CDB is received from at least one of the plurality of servers 40, multi paths are closed by performing maintenance work for the maintenance object component, affecting the business.

When the maintenance enabled CDB is received from all the servers 40 including maintenance object paths before the work expected time of maintenance work, the work permission determination unit 13 determines that maintenance work thereof is performable.

When making the above determination, the work permission determination unit 13 determines that the server 40 that does not transmit an inquiry request is down or all paths to the server 40 are closed and excludes the server 40 from monitoring objects. The server 40 that does not respond can be considered not to be affected if maintenance work for the maintenance object component is performed.

Further, when both of the maintenance enabled CDB and the maintenance disabled CDB are contained in the maintenance possibility information of each path received from the server 40, non-maintenance object paths are valid, and further a path operation unit 44 described later closes maintenance object paths, the work permission determination unit 13 diagnoses maintenance work thereof is performable.

The work permission information output unit 14 is notified of a determination result by the work permission determination unit 13.

The work permission information output unit 14 outputs the determination result by the work permission determination unit 13. That is, the work permission information output unit 14 outputs permission information indicating permission or refusal of maintenance work for a maintenance object component to the maintenance PC 70.

When notified by the influence determination unit 11 that a maintenance object component does not affect paths, the work permission information output unit 14 notifies the maintenance PC 70 of permission of maintenance work for the maintenance object component.

The server 40 is a host computer that performs various kinds of processing by accessing the storage apparatus 10 and writes data into or reads data from the storage unit 31 of the storage apparatus 10.

In the examples depicted in FIGS. 1 and 2, for the sake of convenience, only the HBA 46 is depicted as the hardware configuration of the server 40. Also in the example depicted in FIG. 1, for the sake of convenience, the illustration of the function configuration of the server 40-2 is omitted and the function configuration of only the server 40-1 is depicted, but the server 40-2 also has the function configuration similar to that of the server 40-1.

The server 40 includes a CPU and a storage (not depicted), and the HBA 46 and is an information processing apparatus that realizes various functions by executing the OS or various programs by the CPU.

The server 40 has the function as a computer and functions, as depicted in FIG. 1, as a path information notification unit 41, the path diagnosis unit 42, a path diagnosis result output unit 43, the path operation unit 44, and a diagnosis interval change unit 45.

Programs to realize the functions of the path information notification unit 41, the path diagnosis unit 42, the path diagnosis result output unit 43, the path operation unit 44, and the diagnosis interval change unit 45 are provided in a form recorded in a computer readable recording medium, for example, a flexible disk, CD (CD-ROM, CD-R, CD-RW and so on), DVD (DVD-ROM, DVD-RAM, DVD-R, DVD+R, DVD-RW, DVD+RW, HD DVD and so on), Blu-ray disk, magnetic disk, optical disk, and magneto-optical disk. Then, the computer reads a program from the computer readable recording medium and transfers the stores the program in an internal storage apparatus or an external storage apparatus for use. Alternatively, the program may be recorded in a storage apparatus (recording medium) like, for example, a magnetic disk, optical disk, or magneto-optical disk to provide the program to the computer from the storage apparatus via a communication path.

When the functions as the path information notification unit 41, the path diagnosis unit 42, the path diagnosis result output unit 43, the path operation unit 44, and the diagnosis interval change unit 45 are realized, programs stored in the internal storage apparatus (in the present embodiment, a RAM or a ROM) are executed by a microprocessor (in the present embodiment, the CPU of the server 40) of the computer. At this point, the computer may read a program recorded in a recording medium and execute the program.

The path information notification unit 41 notifies the storage apparatus 10 of path set information of multi paths. The path information notification unit 41 notifies the storage apparatus 10 of a unique value for each set of multi paths (each path set) when the server 40 is activated or multi paths are built. The path information notification unit 41 transmits path set information like, for example, "CPUID or server name different from each server 40 + path set number managed by multi paths" to the storage apparatus 10 with predefined unique CDB.

The function of the path information notification unit 41 is realized by, for example, executing a multi-path driver (multi-path software) on the server 40.

The path diagnosis unit 42 conducts a path diagnosis each time a predetermined path diagnosis interval passes. The path diagnosis is conducted to the storage apparatus 10 by transmitting an inquiry request to each of all paths constituting multi paths for the local server 40 and receiving an inquiry notification as a response to the inquiry request from each. The path diagnosis unit 42 determines that a path to which an inquiry request can be transmitted and from which an inquiry notification can be received as a normal path.

The path diagnosis unit 42 determines that a path through which an inquiry request failed to be transmitted or through which an inquiry notification failed to be received has a failure in one of network devices such as the switch 60, the HBA 46, or the CA 24 or one of the communication lines 51 to 58. The path diagnosis unit 42 conducts such a diagnosis for all paths constituting multi paths for the local server 40.

The path diagnosis unit 42 collects inquiry notifications transmitted from the storage apparatus 10 and diagnoses whether maintenance work is performable (path diagnosis) based on each maintenance flag for each path.

Then, the path diagnosis unit 42 issues, as a result of path diagnosis, a CDB response (the maintenance enabled CDB or maintenance disabled CDB) indicating a determination result as maintainable or non-maintainable to the storage apparatus 10.

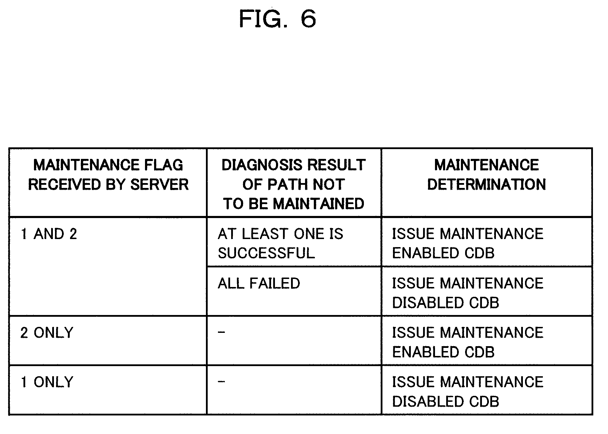

FIG. 6 is a diagram illustrating a maintenance determination example by the path diagnosis unit 42 in the storage system 1 as an example of the embodiment.

If the maintenance flags of inquiry notification received for each path are all non-maintenance objects (the value "2" illustrated in FIG. 4), the path diagnosis unit 42 determines that maintenance work for the maintenance object component is performable (maintainable). Accordingly, the path diagnosis result output unit 43 described later issues the maintenance enabled CDB. This is because, in this case, the server 40 is considered to include no affected path or maintenance object paths are considered to have been closed.

If the maintenance flags of inquiry notification received for each path all maintenance objects (the value "1" illustrated in FIG. 4), the path diagnosis unit 42 determines that maintenance work for the maintenance object component is not performable (non-maintainable). Accordingly, the path diagnosis result output unit 43 described later issues the maintenance disabled CDB. This is because all paths are considered to be closed by performing maintenance work for the maintenance object component.

Further, if the maintenance flags of received inquiry notifications include both of non-maintenance objects (the value "2" illustrated in FIG. 4) and maintenance objects (the value "1" illustrated in FIG. 4), the path diagnosis unit 42 next checks whether diagnosis is successful for non-maintenance object paths constituting the same path set as the maintenance object path. That is, whether transmission of an inquiry request to and reception of an inquiry notification from non-maintenance object paths are successful is checked.

In the example depicted in FIG. 1, for example, the server 40-1 forms multi paths by two paths of the HBA 46-1 and the HBA 46-2. In this example, of the HBA 46-2 is a maintenance object path, the path diagnosis unit 42 determines whether the diagnosis of the HBA 46-1 as a non-maintenance object path constituting multi paths is successful.

If the diagnosis fails for all non-maintenance object paths, maintenance work for the maintenance object component is determined to be non-performable (non-maintainable). Accordingly, the path diagnosis result output unit 43 described later issues the maintenance disabled CDB.

On the other hand, if the diagnosis of at least one non-maintenance object path is successful, the path diagnosis unit 42 makes a notification and causes the path operation unit 44 to close the maintenance object path.

In the above example, if the diagnosis of the HBA 46-1 as a non-maintenance object path in multi paths is successful, the path diagnosis unit 42 causes the path operation unit 44 to close the path of the HBA 46-2.

When a path closure by the path operation unit 44 is completed, the path diagnosis unit 42 determines that maintenance work for the maintenance object component is performable (maintainable). Accordingly, the path diagnosis result output unit 43 described later issues the maintenance enabled CDB.

The path diagnosis by the path diagnosis unit 42 is basically repeated at first intervals (basic path diagnosis interval; for example, 10 min). Then, when a path diagnosis interval instruction is provided by the diagnosis interval change unit 45 described later, the execution interval of the path diagnosis (path diagnosis interval) is changed to a second interval (for example, five sec), which is shorter than the basic path diagnosis interval, by the diagnosis interval change unit 45 described later.

When an inquiry notification including a maintenance flag indicating the completion of maintenance from the storage apparatus 10, the path diagnosis unit 42 causes the path operation unit 44 to restore the closed path. Then, if the restoration of path by the path operation unit 44 is successful, the path diagnosis unit 42 causes the path diagnosis result output unit 43 to issue recovery complete CDB and causes the diagnosis interval change unit 45 to bring the execution interval of the path diagnosis from the second interval back to the basic path diagnosis interval.

If the path recovery by the path operation unit 44 fails, the path diagnosis unit 42 causes the path diagnosis result output unit 43 to issue recovery failure CDB.

By transmitting CDB (maintenance possibility information) including each determination result by the path diagnosis unit 42 to the storage apparatus 10, the path diagnosis result output unit 43 notifies the storage apparatus 10 of diagnosis results. That is, the path diagnosis result output unit 43 outputs the maintenance enabled CDB as the maintenance possibility information when maintenance work is determined to be performable and the maintenance disabled CDB when maintenance work is determined to be non-performable.

The path diagnosis result output unit 43 desirably continues to output the maintenance enabled CDB until a maintenance stop instruction or a maintenance complete report is input from the maintenance PC 70. The timing of path diagnosis may be different from the server 40 to the server 40. If, the example, the difference of the timing of path diagnosis between the servers 40 is 10 min, a failure may suddenly for some reason after issuing the maintenance enabled CDB by assuming that the path is initially normal. This is because in such a case, a response of the maintenance stop occurs when maintenance becomes non-executable after a path failure is detected by the path diagnosis. However, the path diagnosis result output unit 43 may output the maintenance disabled CDB when maintenance work is determined to be non-executable.

The path operation unit 44 performs processing on paths. More specifically, the path operation unit 44 closes paths or restores closed paths. A path closure can be realized by various known methods, for example, by blocking signal transmission of a path or stopping power supply and thus, a detailed description thereof is omitted.

The diagnosis interval change unit 45 changes the interval of path diagnosis by the path diagnosis unit 42. After the path diagnosis result output unit 43 transmits a path diagnosis result to the storage apparatus 10, the diagnosis interval change unit 45 makes a notification to change the execution interval of path diagnosis by the path diagnosis unit 42 from the basic path diagnosis interval to the second interval.

By changing the execution interval of path diagnosis to the second interval, which is shorter than the basic path diagnosis interval, an inquiry notification can be received earlier from the storage apparatus 10 and also the latest state can be grasped immediately before maintenance work. If, for example, the diagnosis interval is 10 min, the path state grasped by the server 40 is a state about 10 min ago and therefore has possibility of being not the latest. That is, some failure may arise in the maintenance object path during 10 min so that all paths may be closed by performing maintenance work.

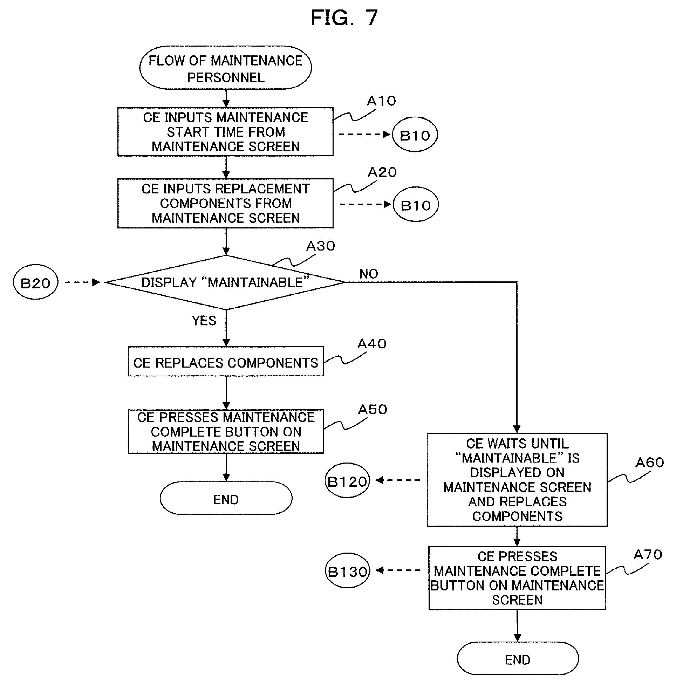

Processing by CE during maintenance work in the storage system 1 as an example of an embodiment configured as described above will be described following the flow chart (steps A10 to A70) depicted in FIG. 7.

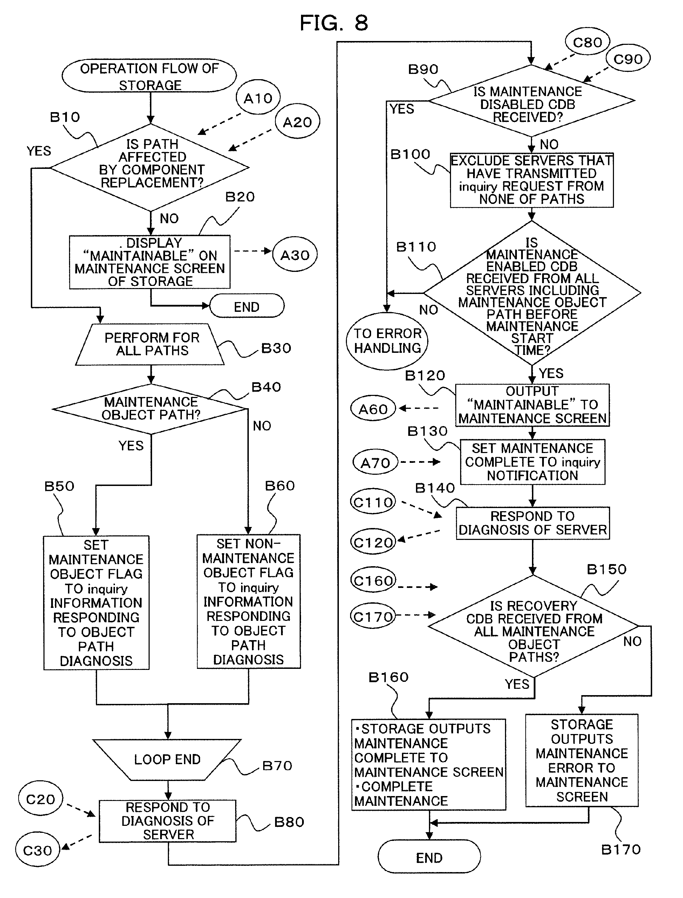

CE inputs the maintenance start time after the basic path diagnosis interval (for example, 10 min) from the current time from the maintenance screen of the maintenance PC 70 (step A10). CE also inputs the maintenance object component intended for maintenance work from the maintenance screen of the maintenance PC 70 (step A20). The processing order of these steps A10, A20 is not limited to the above order and the processing of step A20 may be performed prior to step A10 or simultaneously. Processing of the storage apparatus 10 depicted in FIG. 8 described later is started by the above processing (see step B10)

CE checks whether maintainable is displayed on the maintenance screen of the display apparatus of the maintenance PC 70 (step A30). The display of maintainable on the maintenance screen is made in step B20 of FIG. 8 described later.

When maintainable is displayed on the maintenance screen (see the YES route in step A30), in step A40, CE performs maintenance work of the maintenance object component (step A40). When the maintenance work is completed, CE performs input processing to report the completion of the maintenance work by selecting a maintenance complete button on the maintenance screen of the maintenance PC 70 (step A50) before terminating the processing.

When maintainable is not displayed on the maintenance screen (see the NO route in step A30), CE waits until maintainable is displayed on the maintenance screen and then performs maintenance work of the maintenance object component (step A60). The display of maintainable on the maintenance screen is made in step B120 of FIG. 8 described later.

When the maintenance work is completed, CE performs input processing to report the completion of the maintenance work by selecting the maintenance complete button on the maintenance screen of the maintenance PC 70 (step A70). This processing is reflected in step B130 of FIG. 8 described later. Then, the processing terminates.

Next, processing of the storage apparatus 10 during maintenance work in the storage system 1 as an example of the present embodiment will be described following the flow chart (steps B10 to B170) depicted in FIG. 8.

Based on the maintenance start time and the maintenance object component input in steps B10, B20 of FIG. 7 described above, the influence determination unit 11 in the storage apparatus 10 determines whether paths are affected by performing maintenance work of the specified maintenance object component (step B10).

If the maintenance work of the maintenance object component does not affect paths (see NO route in step B10), the maintenance screen of the display apparatus of the maintenance PC 70 is caused to display maintainable (step B20) before the processing is terminated. This processing is reflected in the YES route in step A30 depicted in FIG. 7.

If the maintenance work of the maintenance object component affects paths (see YES route in step B10), the maintenance flag of an inquiry notification is set to all paths connected to the storage apparatus 10.

In step B30, loop processing in which the storage apparatus 10 repeats control up to step B70 on all connected paths is started.

In step B40, the influence determination unit 11 refers to the multi-path configuration management table 231 based on the maintenance object component to check whether each path is a maintenance object path. If the influence determination unit 11 determines that the path is a maintenance object path (see the YES route in step B40), a maintenance flag indicating that the path is a maintenance object path is set to an inquiry notification transmitted as a response to path diagnosis (step B50).

On the other hand, if the influence determination unit 11 determines that the path is a non-maintenance object path (see the NO route in step B40), a maintenance flag indicating that the path is a non-maintenance object path is set to an inquiry notification transmitted as a response to path diagnosis (step B60).

Then, the control proceeds to step B70. In step B70, loop end processing corresponding to step B30 is performed. When processing for all paths is completed, the control proceeds to step B80.

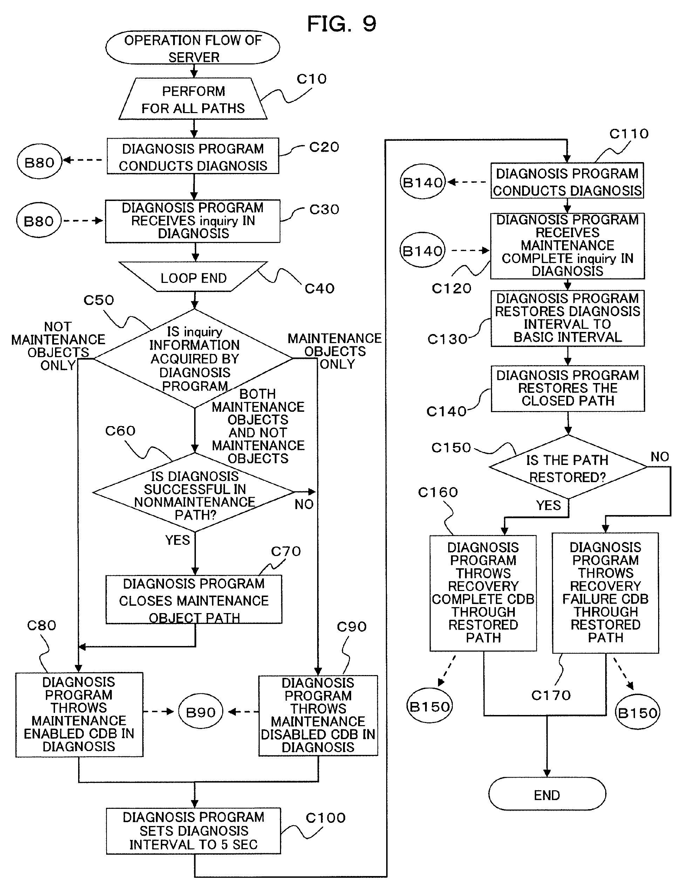

In step B80, the notification information output unit 12 transmits the inquiry notification to each path in response to an inquiry request of path diagnosis from the server 40. The path diagnosis from the server 40 is conducted in step C20 of FIG. 9 described later. Also, the inquiry notification is reflected in step C30 depicted in FIG. 9 described later.

The work permission determination unit 13 checks whether the maintenance enabled CDB is received from the server 40 (step B90). The transmission of the maintenance enabled CDB or maintenance disabled CDB is performed in steps C80, C90 of FIG. 9 described later.

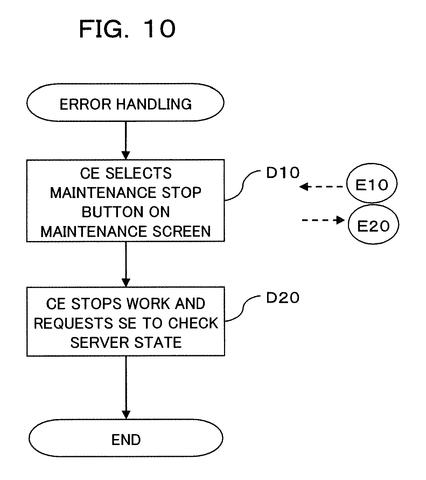

If the maintenance disabled CDB is received from at least one of the plurality of servers 40 (see YES route in step B90), the control proceeds to error handling. The error handling will be described later by using FIGS. 10 to 12.

If the maintenance disabled CDB is received from none of the plurality of servers 40 (see NO route in step B90), next if there is the server 40 that has not transmitted an inquiry request from any path, the server 40 is excluded from monitoring objects (step B100).

The work permission determination unit 13 also checks whether the maintenance enabled CDB is received from all the servers 40 including the maintenance object path before the maintenance start time (step B110). If the maintenance enabled CDB is not received from all the servers 40 including the maintenance object path before the maintenance start time (see NO route in step B110), the control proceeds to error handling.

If the maintenance enabled CDB is received from all the servers 40 including the maintenance object path before the maintenance start time (see YES route in step B110), the work permission determination unit 13 determines that the maintenance work is performable.

The work permission information output unit 14 outputs permission information indicating permission of maintenance work for the maintenance object component to the maintenance PC 70 to cause the maintenance screen of the maintenance PC 70 to display maintainable (step B120). The processing is reflected in step A60 depicted in FIG. 7 described above.

When the maintenance work is performed by CE and a maintenance complete report is input on the maintenance screen of the maintenance PC 70 (see step A70 in FIG. 7 described above), the work permission determination unit 13 sets a maintenance flag indicating work completion to an inquiry notification (step B130).

When an inquiry request of path diagnosis is received from the server 40, the notification information output unit 12 returns an inquiry notification for each path (step B140). An inquiry request from the server 40 is made in step C110 of FIG. 9 described later and an inquiry notification is reflected in step C120 of FIG. 9 described later.

Then, whether the recovery complete CDB is received from all maintenance object paths is checked (step B150). The transmission of the recovery complete CDB or recovery failure CDB is performed in steps B150, B160 of FIG. 8 described later.

If the recovery complete CDB is received from all maintenance object paths, that is, if the recovery complete CDB (recovery complete message) is received from all the servers 40 (see the YES route in step B150), the work permission information output unit 14 causes the maintenance screen of the maintenance PC 70 to output the maintenance completion and completes the maintenance work (step B160) before terminating the processing.

If the recovery complete CDB is not received from all maintenance object paths, (see the NO route in step B150), the work permission information output unit 14 causes the maintenance screen of the maintenance PC 70 to output a maintenance error (step B170) before terminating the processing. If there is a path about which no maintenance complete CDB is received within a fixed time, there is a possibility that a path of the server 40 is not restored and thus, CE is notified of the possibility through the display of the maintenance screen of the maintenance PC 70. CE who views the notification on the maintenance screen requests SE to check the state of the server 40.

Next, processing of the server 40 during maintenance work in the storage system 1 as an example of the embodiment will be described following the flow chart (steps C10 to C170) depicted in FIG. 9.

The server 40 periodically conducts a path diagnosis of all paths at intervals of basic path diagnosis (for example, at intervals of 10 min) (steps C10 to C40).

In step C10, loop processing in which the control up to step C40 is repeated for all paths connected to the server 40 is started.

In step C20, an inquiry request about each path is transmitted. The inquiry request is reflected in step B80 depicted in FIG. 8 described above. In step C30, an inquiry notification to the transmitted inquiry request is received. The inquiry notification is made in step B80 of FIG. 8 described above.

Then, the control proceeds to step C40. In step C40, loop end processing corresponding to step C10 is performed. When processing for all paths is completed, the control proceeds to step C50.

In step C50, the path diagnosis unit 42 determines each maintenance flag of the inquiry notification for each path transmitted from the storage apparatus 10.

If the maintenance flags are all non-maintenance objects (see the "Not maintenance objects only" route in step C50), the path diagnosis result output unit 43 issues the maintenance enabled CDB (step C80). The maintenance enabled CDB is reflected in step B90 depicted in FIG. 8 described above.

If the maintenance flags are all maintenance objects (see the "Maintenance objects only" route in step C50), the path diagnosis result output unit 43 issues the maintenance disabled CDB (step C90). The maintenance disabled CDB is reflected in step B90 depicted in FIG. 8 described above.

Further, if the maintenance flags of received inquiry notifications include both of non-maintenance objects and maintenance objects (see the "Both maintenance objects and not maintenance objects" route in step C50), next the path diagnosis unit 42 checks whether diagnosis is successful for non-maintenance object paths constituting the same path set as the maintenance object path (step C60).

If the diagnosis fails for all non-maintenance object paths (see the NO route in step C60), the control proceeds to step C90.

On the other hand, if the diagnosis of at least one non-maintenance object path is successful (see the YES route in step C60), the path operation unit 44 closes maintenance object paths (step C70) and then the control proceeds to step C80.

Then, the diagnosis interval change unit 45 changes the execution interval of path diagnosis by the path diagnosis unit 42 from the basic path diagnosis interval to the second interval (for example, at intervals of five sec) (step C100) and the path diagnosis unit 42 conducts the path diagnosis at newly set second intervals (step C110). The processing is reflected in step B140 depicted in FIG. 8 described above.

When the maintenance work by CE is completed, an inquiry notification including a maintenance flag indication the completion of maintenance is received in step B140 depicted in FIG. 8 described above (step C120).

The diagnosis interval change unit 45 brings the path diagnosis interval back to the basic path diagnosis interval (step C130). The processing of bringing the path diagnosis interval back to the basic path diagnosis interval may be performed after path recovery in step C140 and can be performed by making an appropriate change. If any path is closed in step C70, the path operation unit 44 restores the closed path (step C140). Whether path recovery is successful is checked (step C150) and if the path recovery is successful (see the YES route in step C150), the path diagnosis result output unit 43 outputs the recovery complete CDB through a restored path (step C160). The processing is reflected in step B150 depicted in FIG. 8 described above. Then, the processing is terminated.

If the path recovery is not successful (see the NO route in step C150), the path diagnosis result output unit 43 outputs the recovery failure CDB via a path constituting a path set with the closed path (step C170). The processing is reflected in step B150 depicted in FIG. 8 described above. Then, the processing is terminated.

Next, processing of CE during error handling in the storage system 1 as an example of the embodiment will be described following the flow chart (steps D10, D20) depicted in FIG. 10.

In the NO route in step B90 or the NO route in step B110 of the FIG. 8 described above, an input screen (for example, a maintenance stop button) to instruct the stop of maintenance work or non-maintainable paths are displayed on the maintenance screen of the maintenance PC 70.

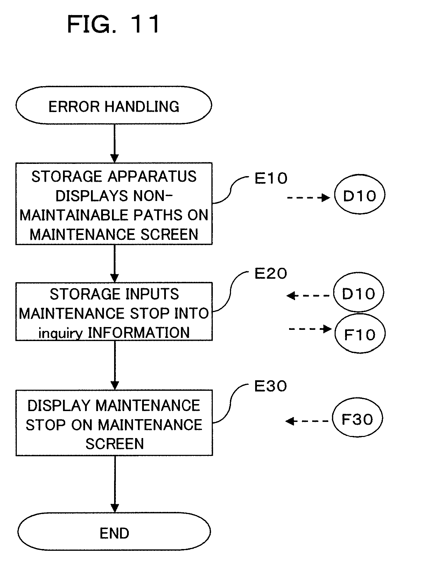

CE performs input processing to instruct the stop of maintenance work by selecting the maintenance stop button on the input screen (step D10). The stop instruction is transmitted to the storage apparatus 10 and the server 40 as a maintenance stop instruction. The processing is reflected in step E20 depicted in FIG. 11 described later. The display of the maintenance stop button or non-maintainable paths on the maintenance screen is made in step E10 depicted in FIG. 11 described later.

CE stops work and requests SE to check the state of the server 40 (step D20) before terminating the distance (sic, correctly, process).

Next, processing of the storage apparatus 10 during error handling in the storage system 1 as an example of the embodiment will be described following the flow chart (steps E10 to E30) depicted in FIG. 11.

In the storage apparatus 10, for example, the work permission determination unit 13 causes the maintenance screen of the maintenance PC 70 to display information indicating non-maintainability and non-maintainable paths (step E10). The processing is reflected in step D10 depicted in FIG. 10 described above.

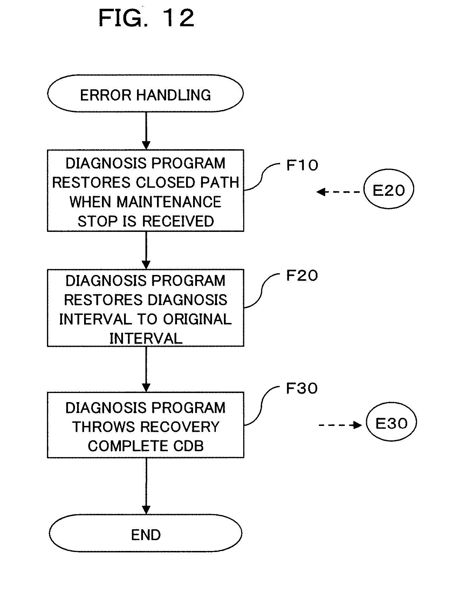

The influence determination unit 11 sets the maintenance stop to the maintenance flag of an inquiry notification (step E20). The setting of the maintenance stop to the maintenance flag of an inquiry notification is made based on step D10 of FIG. 10. The processing is reflected in step F10 depicted in FIG. 12 described later.

Then, the work permission information output unit 14 displays information about the stop of maintenance work on the maintenance screen of the maintenance PC 70 (step E30). The stop instruction of maintenance work is issued in step D10 of FIG. 10 described above.

The processing is reflected in step F30 depicted in FIG. 12 described later. Then, the processing is terminated.

Next, processing of the server 40 during error handling in the storage system 1 as an example of the embodiment will be described following the flow chart (steps F10 to F30) depicted in FIG. 12.

If the maintenance stop is set to the maintenance flag of an inquiry notification in step E20 of FIG. 11 described above, the path operation unit 44 in the server 40 having received the inquiry notification restores the path closed in step C70 of FIG. 9 described above (step F10).

In addition, the diagnosis interval changed in step C100 of FIG. 9 is brought back to the basic path diagnosis interval (step F20).

Then, the path diagnosis result output unit 43 outputs the recovery complete CDB (step F30). The processing is reflected in step E30 of FIG. 11 described above. Then, the processing is terminated.

Therefore, the present storage system 1 is the storage system 1 including the one or more servers 40 and the processing apparatus 10 connected to the one or more servers 40 via a plurality of paths including the influence determination unit 11 that determines whether each of the paths in the network system 1 is an affected path affected by maintenance work or an unaffected path not affected by the maintenance work by referring to the path management information 231 (sic, correctly, multi-path configuration management table 231) that manages information about the plurality of paths based on a maintenance object component as an object of the maintenance work, the path influence information output unit 12 that outputs determination result information indicating each path to be the affected path or the unaffected path, the maintenance possibility diagnosis unit 42 that conducts a diagnosis on whether the maintenance work is performable based on the determination result information of each path, the maintenance possibility information output unit 43 that outputs the determination result by the maintenance possibility diagnosis unit as maintenance possibility information, and the work permission information output unit 14 that outputs permission information indicating permission or refusal of the maintenance work for the maintenance object component based on the maintenance possibility information.

According to the storage system 1 as an example of an embodiment, as described above, CE is notified of permission or refusal of maintenance work only by inputting a maintenance object component on the maintenance PC 70 connected to the storage apparatus 10. Accordingly, checking of the system configuration by SE or the like is made unnecessary, improving workability.

According to the present storage system 1, maintenance work can be performed only by processing of particularly (a), (b), and (c) below being performed by CE.
(a) CE inputs the maintenance start time by selecting the maintenance start on the maintenance screen of the maintenance PC 70.
(b) After making sure that maintainable is displayed on the maintenance screen, CE performs maintenance work such as component replacement.
(c) CE inputs the completion of maintenance on the maintenance screen to complete the maintenance.

Therefore, when compared with the conventional method, maintenance work can be performed with less labor, which makes the storage system highly convenient. In addition, the probability of occurrence of human errors can be lowered by reducing processing performed by a human being (CE), which improves reliability.

In the CM 111, for example, the influence determination unit 11 determines the influence of maintenance work on paths by referring to the multi-path configuration management table 231 based on the maintenance object component. Accordingly, there is no need to request processing from SE, which makes the storage system highly convenient.

In addition, when the multi-path configuration management table 231 is generated, path set information or the like is transmitted by the server 40 through CDB. Accordingly, even if the storage apparatus 10 is not connected to LAN, path set information can be acquired, which makes the storage system highly convenient.

The diagnosis interval change unit 45 changes the path diagnosis interval by the path diagnosis unit 42 to the second path diagnosis interval shorter than the basic path diagnosis interval (for example, 10 min). Accordingly, timing shifts of path diagnosis between the servers 40 can be reduced. Particularly by making the second path diagnosis interval short, the latest state of the storage system 1 can be reflected, which improves reliability.

The present invention is not limited to the above embodiment and various modifications can be made without deviating from the spirit of the present invention.

For example, the storage system 1 includes the one storage apparatus 10 and the two servers 40 in the above embodiment, but the present invention is not limited to such an example. That is, the storage system may include the two or more storage apparatuses 10, or the one server 40 or the three or more servers 40.

The above embodiment includes the multi-path configuration management table 231 configured like a table as path management information to manage information about each path in the storage system 1, but the information is not limited to such a form. That is, information included in the path management information may be managed in a form other than a table form.

Further, in the above embodiment, the storage system 1 in which the server 40 and the storage apparatus 10 are connected via the network 50 is depicted, but the present invention is not limited to such an example. That is, instead of the storage apparatus, another processing apparatus may be included and the network system may be such one in which a plurality of computers shares the processing apparatus via a network.

If each embodiment of the present invention is disclosed, a network system, a maintenance work management method, a processing apparatus, and a program can be executed/manufactured by those skilled in the art,

### REFERENCE SIGNS LIST

- 1: Storage system (network system)
- 10: Storage apparatus
- 11: Influence determination unit
- 12: Notification information output unit (path influence information output unit, stop information output unit)
- 13: Work permission determination unit
- 14: Work permission information output unit
- 15: Table management unit
- 21: Buffer memory
- 22: ROM
- 23: RAM
- 24, 24-1 to 24-4: CA
- 31: Storage apparatus
- 40, 40-1, 40-2: Server
- 41: Path information notification unit
- 42: Path diagnosis unit (maintenance possibility determination unit)
- 43: Path diagnosis result output unit (maintenance possibility information output unit)
- 44: Path operation unit (closing processing unit)
- 45: Diagnosis interval change unit (interval change unit)
- 46, 46-1 to 46-6: HBA
- 50: Network
- 51 to 58: Communication line
- 60, 60-1, 60-2: Switch
- 70: Maintenance PC
- 110: CPU
- 111, 111-1, 111-2: CM
- 231: Multi-path configuration management table

## Claims

1. A network system comprising a maintenance object apparatus having maintenance object components as objects of maintenance work and a plurality of processing apparatuses connected to the maintenance object apparatus via a plurality of paths, wherein
the maintenance object apparatus comprises an influence determination unit configured to determine whether each of the paths in the network system is a prospective to be affected path affected by the maintenance work or a prospective to be unaffected path not affected by the maintenance work by referring to path management information that manages information about the plurality of paths and
a path influence information output unit configured to output a determination result determined by the influence determination unit to the plurality of processing apparatuses as path influence information about each of the paths and
each of the processing apparatuses comprises
a maintenance possibility diagnosis unit configured to conduct a diagnosis on whether the maintenance work is performable based on the path influence information of the path connected to a local apparatus and
a maintenance possibility information output unit configured to output a diagnosis result by the maintenance possibility diagnosis unit to the maintenance object apparatus as maintenance possibility information, wherein
the maintenance object apparatus outputs permission information indicating permission or refusal of the maintenance work for the maintenance object components based on the maintenance possibility information of the plurality of processing apparatuses.

2. The network system according to claim 1, wherein when all the paths in the network system are indicated to be the unaffected paths, the maintenance possibility diagnosis unit diagnoses the maintenance work as performable based on the path influence information about each of the paths.

3. The network system according to claim 1 or 2, wherein when all the paths in the network system are indicated to be the affected paths, the maintenance possibility diagnosis unit diagnoses the maintenance work as non-performable based on the path influence information about each of the paths.

4. The network system according to any one of claims 1 to 3, further comprising: a closing processing unit capable of closing the path, wherein
the maintenance possibility diagnosis unit diagnoses that the maintenance work is performable based on the path influence information about each of the paths when both of the affected path and the unaffected path are included in the network system and the closing processing unit closes the affected path when the unaffected path is valid.

5. The network system according to claim 1, further comprising: a stop notification information output unit configured to output stop notification information indicating a stop of the maintenance work when a maintenance stop indication indicating the stop of the maintenance work is input, wherein
when the stop notification information is output, the closing processing unit releases a closure of the path.

6. The network system according to any one of claims 1 to 5, further comprising: an interval change unit configured to shorten a collection interval of the path influence information by the maintenance possibility diagnosis decision unit (sic, correctly, maintenance possibility diagnosis unit) after the maintenance possibility diagnosis unit conducts the diagnosis on whether the maintenance work is performable.

7. The network system according to claim 6, further comprising: a stop notification information output unit configured to output stop notification information indicating a stop of the maintenance work when a maintenance stop indication indicating the stop of the maintenance work is input, wherein
when the stop notification information is output, the collection interval of the path influence information shortened by the interval change unit is restored to an original interval.

8. The network system according to any one of claims 1 to 7, further comprising: a work permission determination unit configured to determine to permit or refuse the maintenance work for the maintenance object components based on the maintenance possibility information transmitted from each of a plurality of the maintenance possibility information output units, wherein
the permission information is output from the work permission information output unit (sic, correctly, the permission information is output) based on the determination result by the work permission determination unit.

9. The network system according to any one of claims 1 to 8, further comprising: a path information notification unit configured to make a notification of information about the path; and
a path management information creation unit configured to create the path management information based on the information about the path notified from the path information notification unit.

10. A maintenance work management method in a network system comprising a maintenance object apparatus having maintenance object components as objects of maintenance work and a plurality of processing apparatuses connected to the maintenance object apparatus via a plurality of paths, the maintenance object apparatus comprising:
determining whether each of the paths in the network system is a prospective to be affected path affected by the maintenance work or a prospective to be unaffected path not affected by the maintenance work by referring to path management information that manages information about the plurality of paths;
outputting a determined determination result to the plurality of processing apparatuses as path influence information about each of the paths;
conducting a diagnosis on whether the maintenance work is performable based on the path influence information of the path connected to a local apparatus in each of the processing apparatuses;
outputting the diagnosis result to the maintenance object apparatus as maintenance possibility information; and
outputting permission information indicating permission or refusal of the maintenance work for the maintenance object components based on the maintenance possibility information of the plurality of processing apparatuses by the maintenance object apparatus.

11. The maintenance work management method according to claim 10, wherein when all the paths in the network system are indicated to be the unaffected paths, the maintenance work is diagnosed as performable based on the path influence information about each of the paths.

12. The maintenance work management method according to claim 10 or 11, wherein when all the paths in the network system are indicated to be the affected paths, the maintenance work is diagnosed as non-performable based on the path influence information about each of the paths.

13. The maintenance work management method according to any one of claims 10 to 12, wherein the maintenance work is diagnosed as performable based on the path influence information about each of the paths when both of the affected path and the unaffected path are included in the network system and the affected path is closed when the unaffected path is valid.

14. The maintenance work management method according to claim 13, further comprising: outputting stop notification information indicating a stop of the maintenance work when a maintenance stop indication indicating the stop of the maintenance work is input, wherein
when the stop notification information is output, a closure of the path is released.

15. The maintenance work management method according to any one of claims 10 to 14, further comprising: shortening a collection interval of the path influence information after the diagnosis on whether the maintenance work is performable is conducted.

16. The maintenance work management method according to claim 15, further comprising: outputting stop notification information indicating a stop of the maintenance work when a maintenance stop indication indicating the stop of the maintenance work is input, wherein
when the stop notification information is output, the shortened collection interval of the path influence information is restored to an original interval.

17. The maintenance work management method according to any one of claims 10 to 16, further comprising: determining to permit or refuse the maintenance work for the maintenance object components based on the maintenance possibility information transmitted from each of the plurality of processing apparatuses, wherein
the permission information is output based on the determination result.

18. The maintenance work management method according to any one of claims 10 to 17, further comprising: making a notification of information about the path; and
creating the path management information based on the information about the notified path.

19. A processing apparatus connected to a maintenance object apparatus having maintenance object components as objects of maintenance work via a plurality of paths, wherein
the maintenance object apparatus comprises an influence determination unit configured to determine whether each of the paths is a prospective to be affected path affected by the maintenance work or a prospective to be unaffected path not affected by the maintenance work by referring to path management information that manages information about the plurality of paths,
a path influence information output unit configured to output a determination result determined by the influence determination unit as path influence information about each of the paths, and
a work permission information output unit configured to output permission information indicating permission or refusal of the maintenance work for the maintenance object components based on maintenance possibility information indicating a diagnosis result whether the maintenance work performed based on the path influence information of the path connected to a local apparatus is performable.

20. A program causing a computer to execute processing comprising: determining whether, in a network system comprising a maintenance object apparatus having maintenance object components as objects of maintenance work and a plurality of processing apparatuses connected to the maintenance object apparatus via a plurality of paths, each of the paths in the network system is a prospective to be affected path affected by the maintenance work or a prospective to be unaffected path not affected by the maintenance work by referring to path management information that manages information about the plurality of paths,
outputting a determined determination result as path influence information about each of the paths to the plurality of processing apparatuses, and
outputting permission information indicating permission or refusal of the maintenance work for the maintenance object components based on maintenance possibility information indicating a diagnosis result whether the maintenance work performed based on the path influence information of the path connected to a local apparatus is performable.
